# EUROPEAN PATENT SPECIFICATION

(11) **EP 4 133 404 B1**
(45) Date of publication and mention of the grant of the patent: **12.08.2026**
(21) Application number: 21718424.1
(22) Date of filing: 23.03.2021
(51) Int. Cl.: G06V 20/52, G06V 40/16, G06T 7/50

(54) **SYSTEM AND METHOD FOR DETERMINING OBJECT DISTANCE AND COUNT IN A VIDEO STREAM**
SYSTEM UND VERFAHREN ZUR BESTIMMUNG DER OBJEKTDISTANZ UND/ODER -ZÄHLUNG IN EINEM VIDEOSTROM
SYSTÈME ET PROCÉDÉ DE DÉTERMINATION DE DISTANCE ET/OU DE NOMBRE D'OBJETS DANS UN FLUX VIDÉO

(30) Priority: 09.04.2020 US 202063007900 P; 19.03.2021 US 202117207100
(43) Date of publication of application: 15.02.2023
(73) Proprietor: Sensormatic Electronics, LLC, Boca Raton, FL 33487 (US)
(72) Inventor: SUBRAMANIAN, Gopi, Boca Raton, Florida 33487 (US); CELI, Joseph, Boca Raton, Florida 33487 (US)
(74) Representative: Meissner Bolte Nürnberg
(86) International application number: PCT/US2021/023565
(87) International publication number: WO 2021/206897

(56) References cited:
- US-A1- 2018 068 172
- ANONYMOUS: "Social Distancing really matters - V-App", 6 April 2020 (2020-04-06), pages 1 - 4, XP055803300, Retrieved from the Internet <URL:https://www.v-app.io/2020/04/06/social-distancing-really-matters/> [retrieved on 20210511]
- FABRIZIO FLACCO ET AL: "Depth space approach to human-robot collision avoidance", ROBOTICS AND AUTOMATION (ICRA), 2012 IEEE INTERNATIONAL CONFERENCE ON, IEEE, 14 May 2012 (2012-05-14), pages 338 - 345, XP032450976, ISBN: 978-1-4673-1403-9, DOI: 10.1109/ICRA.2012.6225245
- MICHAEL GORKOW: "Track Social Distancing Using Computer Vision | by Michael Gorkow | Medium", 29 April 2020 (2020-04-29), pages 1 - 6, XP055803391, Retrieved from the Internet <URL:https://medium.com/@michaelgorkow/track-social-distancing-using-computer-vision-2032d35cbcb4> [retrieved on 20210511]

## Description

### CROSS-REFERENCE TO RELATED APPLICATIONS

The present application claims priority to United States Non-Provisional Application No. 17/207,100 filed on March 19, 2021, entitled "System and Method for Determining Object Distance and/or Count in a Video Stream," and United States Provisional Application No. 63/007,900 filed on April 9, 2020, entitled "System and Method for Determining Object Distance and/or Count in a Video Stream,"

### BACKGROUND

The present disclosure relates generally to video monitoring systems, and more particularly, to systems and methods for determining a distance between objects and/or counting objects in a video stream. US 2018/068172 A1 is an example for a video monitoring system.

Entities that own or use space within a building may implement constraints on occupancy and social distancing in order to reduce the spread of a virus, such as but not limited to COVID19. Implementing such solutions requires a lot of manpower and can require monitoring large areas, which can be expensive and/or inefficient.

Thus, improved solutions for monitoring occupancy and social distancing are desired.

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

The present disclosure provides systems, apparatuses, and methods for determining physical distances from video frames and generating a distance alert, and/or for counting objects in video frames and generating a count alert.

In an aspect, a video analysis system for determining physical information from a video frame, comprises a memory, a processor in communication with the memory and configured to: receive a plurality of frames from a video stream; identify a first object and a second object within at least one of the plurality of frames; calculate a physical distance between the first object and the second object using a distance determination model that uses a first size of a first bounding box around the first object to determine a first depth component of a first set of coordinates for the first object, and that uses a second size of a second bounding box around the second object to determine a second depth component of a second set of coordinates for the second object; and generate a distance alert based on the physical distance.

In an aspect, the processor is further configured to: compare the physical distance to a distance threshold condition; and generate the distance alert in response to the physical distance meeting the distance threshold condition.

In another aspect, the processor is further configured to: increment an object count value based on identifying the first object and the second object; and generate an object count alert based on the object count value.

The present disclosure includes a method having actions corresponding to the functions of the system, and a computer-readable medium having instructions executable by a processor to perform the described methods.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

The disclosed aspects will hereinafter be described in conjunction with the appended drawings, provided to illustrate and not to limit the disclosed aspects, wherein like designations denote like elements, and in which:
FIG. 1 is a schematic diagram of a system for determining physical distances between objects and/or counting objects in a video stream and generating corresponding alerts according to aspects of the present disclosure;
FIG. 2 is block diagram of an example of a computer device configured to determine physical distances between objects and/or count objects in a video stream and generate corresponding alerts according to aspects of the present disclosure;
FIG. 3 is a flow diagram of an example of a method of determining physical information from a video frame of a video stream according to aspects of the present disclosure;
FIG. 4 is a schematic diagram of an example of an image used for determining physical distances between objects and/or counting objects according to aspects of the present disclosure.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known components may be shown in block diagram form in order to avoid obscuring such concepts.

Aspects of the present disclosure provide methods, apparatuses, and systems that allow for determining a physical distance between objects in one or more frames of a video stream and generating a distance alert, and/or for counting objects in one or more frames of a video stream and generating an object count alert.

In an aspect, one problem solved by the present solution is one of generating an accurate distance measurement between any two objects, such as people, in a frame given the complexities and distortions that are commonly found in video streams. This present disclosure describes systems and methods to generate accurate and precise distance measurements even when conditions such as occlusion, distortions, varying lighting conditions, and other complexities are found in the video stream.

In one example, the present disclosure includes a system and method to produce accurate measurements of distance between people, and/or counting of people in a monitored area, to enable the monitoring of social distancing compliance and/or occupancy compliance using a video stream from a video camera. The system and method utilize a combination of features and algorithms to identify objects, such as people in this case, and calculate the distance between all people in a monitored area and/or count the number of people in the monitored area. Specifically, the system and method utilize a deep learning machine learning model for person head detection, object tracking, and a distance calculation model that uses a combination of reference objects and a size of the head for determining distance. The approach described herein can be applied to video streams of varying resolution, focal length, angle, and lighting conditions.

Implementations of the present disclosure may be useful for owners or operators of buildings, stores, or any areas. For example, due to health concerns to avoid transmission and spread of viruses, such as but not limited to COVID19, retailers are allowing shoppers inside a store in a controlled fashion by manually checking the occupancy status in the store and by manually checking social distancing constraints, so that shoppers can be safe while shopping. Existing solutions to this problem are manpower intensive and inefficient. The present solution may provide improved accuracy and improved efficiency to such scenarios, and may generate distance alerts and object count alerts based on configurable settings.

In particular, in an application for monitoring or ensuring social distancing, the described systems and methods can provide information in alerts or alarms, which can be generated if proper social distancing or occupancy limits are not maintained. For example, in some implementations, the described systems and methods can give provide the coordinates at the exact timestamp when the distance threshold is not maintained between any two people in a zone. Further, in some implementations, the described systems and methods can provide group average distance metrics provided, such as if exact location of individuals is not required.

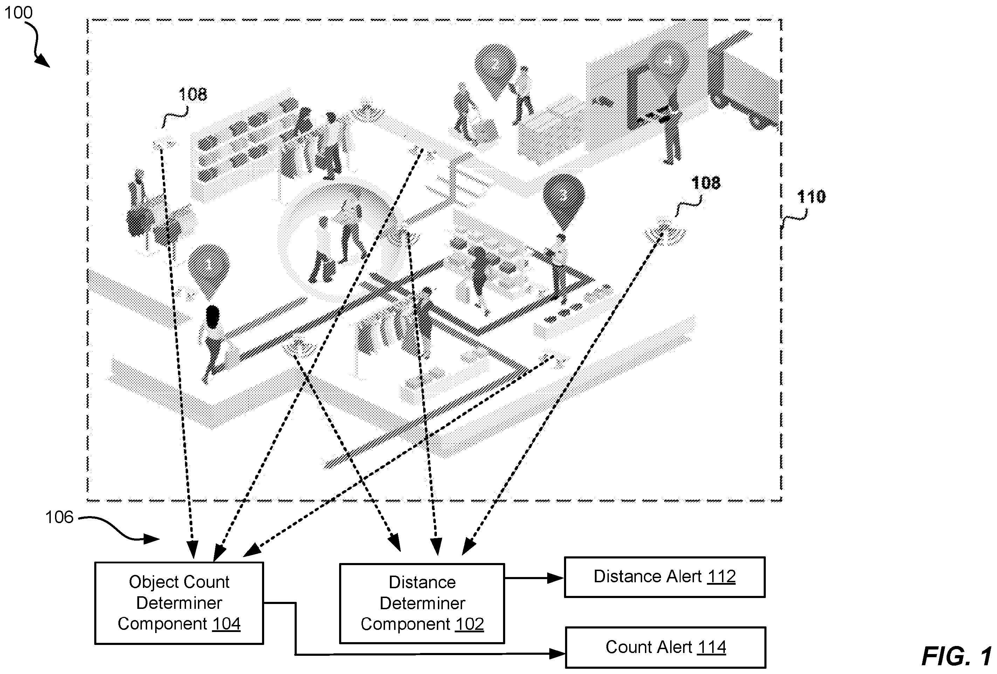

Referring to FIG. 1, in one non-limiting aspect, a video analysis system 100 is configured to determine physical information from a video frame and generate alerts. For example, system 100 is configured to generate an alert based on a physical distance between identified objects, and/or to generate an alert based on a count of a number of the identified objects.

The system 100 includes a distance determiner component 102 and/or an object count determiner component 104 configured to receive one or more video streams 106 from one or more video cameras 108 monitoring an area 110 and respectively generate a distance alert 112 and/or an object count alert 114 based on analyzing one or more frames of the one or more video streams 106.

In one example implementation, the system 100 may be used for monitoring social distancing limits and/or occupancy limits in the monitored area 110, which may be an area within a building, such as a retail store. The system 100 may include a camera enrollment process that uses reference objects of known physical size in a video frame. An image processing algorithm is run against the frame with the reference objects included, and generates a data file providing ratios that will be used by the run time solution to convert pixel distance to real, physical distance.

At runtime, the system 100 includes a video processing pipeline that identifies the head of each person in a frame and a centroid of that head is recorded. Sophisticated tracking algorithms are used to ensure occluded and missed heads are considered and not lost across frames. This information is passed on to the next stage in the video processing pipeline, which is responsible for calculation of the distance between each head and a head of its nearest neighbor. The algorithm used for distance calculation will convert the Euclidian distance between centroids of neighboring heads into real, physical distance measurements.

Notably, this algorithm utilizes a size of a head bounding box to contribute to the distance calculation. In particular, in most cases, the camera angle of a respective video camera 108 is not exactly top down or eye level. As such, the present solution uses the size of the bounding box as an additional feature to estimate the distance of the person to the video camera 108. The algorithm that computes the distance between two objects (in this case the heads of people) uses a 3 dimensional model and the size of the bounding box of the head is providing the Z component of the position coordinates. The X and Y components are transformed from Euclidian distance to real distance using the information stored during the enrollment process. As such, physical distance between objects is calculated, and object count (or occupancy) is calculated.

The distance determiner component 102 and/or the object count determiner component 104 may utilize this information to generate the distance alert 112 and/or the object count alert 114. For example, the distance determiner component 102 and/or the object count determiner component 104 may implement a presentation layer to convey information in the distance alert 112 such as, but not limited to, an average distance between all people in a zone, a closest distance of any person to another person, or a social distance violation alert if the physical distance between two objects violates a minimum distance threshold condition. Similarly, for example, the object count determiner component 104 may implement a presentation layer to convey information in the distance alert 112 such as, but not limited to, the object count alert 114 that identifies a number of people in a zone, or a maximum occupancy alert if the object count meets or violates a maximum occupancy threshold.

As noted above, the approach described herein can be applied to video streams of varying resolution, focal length, angle and lighting conditions.

For example, for handling distortions/warping in video frames, the system 100 utilizes a perspective transformation algorithm on the frame at strategic points gathered during the enrollment process to deal with image warping and distortions.

For example, for dealing with occlusion, the system 100 uses a head detection model as opposed to an object detector model for a whole person (which yields a relatively larger bounding box), and thus the use of a head bounding box reduces the effects of occlusion. Furthermore, the system 100 augments the head detection model with a sophisticated object tracking model. This allow the system 100 to estimate the location of an occluded head in between frames where the head seems to disappear.

For example, for dealing with varying lighting conditions, the system 100 may utilize one or more solutions such as, but not limited to: model selection based on frame timestamp, or image processing to enhance the lighting based on pixel intensity at strategic locations. For instance, for model selection based on time of day, the system 100 may switch between separate models that are separately trained with data collected during daytime and nighttime hours, which should yield better results than a combined model. Further, for dynamic frame light intensity adjustment, a number of regions may be identified during the enrollment process, wherein the identified regions are believed to be subject to a greatest degree of light intensity changes. For example, such an identified region may include, but is not limited to, areas by windows or lights. The system 100 can then adjust the frame lighting using image processing techniques to compensate for low light conditions. Also, the system 100 may generate image masks for varying light conditions and super-impose them on the images.

Moreover, the system 100 may be implemented as an occupancy and social distancing solution that integrates real time occupancy from ShopperTrak Analytics (STAn) along with Artificial Intelligence (AI) or machine learning based social distance measurement using security surveillance cameras in the store to calculate the safe occupancy with adequate social distancing within a retail store. This solution can be configured to set retailer specific parameters and alert the retail associates/shoppers at the entrance and in the queues near point of sale (POS) counters. For example, the solution may be implemented using STAn real time occupancy solution, Social distance measurement model, Security Surveillance system, Smarthub, and one or more applications to integrate real time occupancy with social distance measurement and deliver alerts through email, text, public announcement (PA) speakers, color (e.g., red/green) lights.

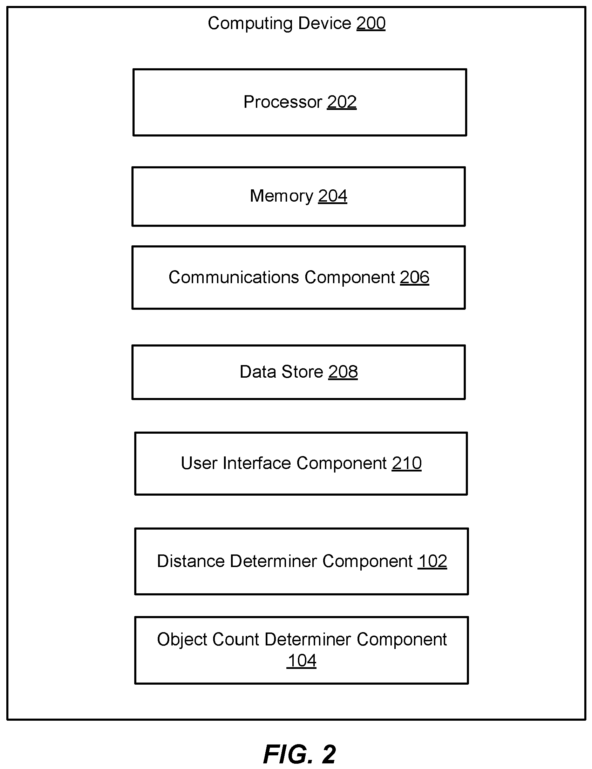

Referring to FIG. 2, a computing device 200 may implement all or a portion of the functionality described herein. For example, the computing device 200 may be or may include or may be configured to implement the functionality of at least a portion of the system 100, or any component therein. The computing device 200 includes a processor 202 which may be configured to execute or implement software, hardware, and/or firmware modules that perform any functionality described herein. For example, the processor 202 may be configured to execute or implement software, hardware, and/or firmware modules that perform any functionality described herein with reference to the distance determiner component 102 generating the distance alert 112 and/or the object count determiner component 104 generating the object count alert 114, or any other component/system/device described herein.

The processor 202 may be a micro-controller, an application-specific integrated circuit (ASIC), a digital signal processor (DSP), or a field-programmable gate array (FPGA), and/or may include a single or multiple set of processors or multi-core processors. Moreover, the processor 202 may be implemented as an integrated processing system and/or a distributed processing system. The computing device 200 may further include a memory 204, such as for storing local versions of applications being executed by the processor 202, related instructions, parameters, etc. The memory 204 may include a type of memory usable by a computer, such as random access memory (RAM), read only memory (ROM), tapes, magnetic discs, optical discs, volatile memory, non-volatile memory, and any combination thereof. Additionally, the processor 202 and the memory 204 may include and execute an operating system executing on the processor 202, one or more applications, display drivers, etc., and/or other components of the computing device 200.

Further, the computing device 200 may include a communications component 206 that provides for establishing and maintaining communications with one or more other devices, parties, entities, etc. utilizing hardware, software, and services. The communications component 206 may carry communications between components on the computing device 200, as well as between the computing device 200 and external devices, such as devices located across a communications network and/or devices serially or locally connected to the computing device 200. In an aspect, for example, the communications component 206 may include one or more buses, and may further include transmit chain components and receive chain components associated with a wireless or wired transmitter and receiver, respectively, operable for interfacing with external devices.

Additionally, the computing device 200 may include a data store 208, which can be any suitable combination of hardware and/or software, that provides for mass storage of information, databases, and programs. For example, the data store 208 may be or may include a data repository for applications and/or related parameters not currently being executed by processor 202. In addition, the data store 208 may be a data repository for an operating system, application, display driver, etc., executing on the processor 202, and/or one or more other components of the computing device 200.

The computing device 200 may also include a user interface component 210 operable to receive inputs from a user of the computing device 200 and further operable to generate outputs for presentation to the user (e.g., via a display interface to a display device). The user interface component 210 may include one or more input devices, including but not limited to a keyboard, a number pad, a mouse, a touch-sensitive display, a navigation key, a function key, a microphone, a voice recognition component, or any other mechanism capable of receiving an input from a user, or any combination thereof. Further, the user interface component 210 may include one or more output devices, including but not limited to a display interface, a speaker, a haptic feedback mechanism, a printer, any other mechanism capable of presenting an output to a user, or any combination thereof.

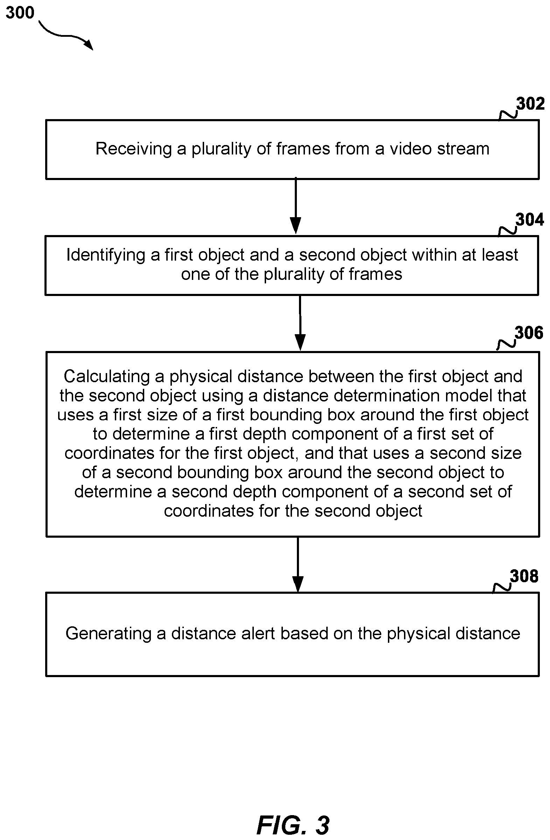

Referring to FIG. 3, in operation, the computer device 200 may perform an example method 300 of determining physical information from a video frame. The method 300 may be performed by one or more components of the computing device 200 or any device/component described herein.

At 302, the method 300 includes receiving a plurality of frames from a video stream.

At 304, the method 300 includes identifying a first object and a second object within at least one of the plurality of frames.

At 306, the method 300 includes calculating a physical distance between the first object and the second object using a distance determination model that uses a first size of a first bounding box around the first object to determine a first depth component of a first set of coordinates for the first object, and that uses a second size of a second bounding box around the second object to determine a second depth component of a second set of coordinates for the second object.

At 306, the method 300 includes generating a distance alert based on the physical distance.

In some implementations, the method 300 may further include comparing the physical distance to a distance threshold condition, wherein generating the distance alert is in response to the physical distance meeting the distance threshold condition.

In some implementations, the method 300 may further include incrementing an object count value based on identifying the first object and the second object, and generating an object count alert based on the object count value

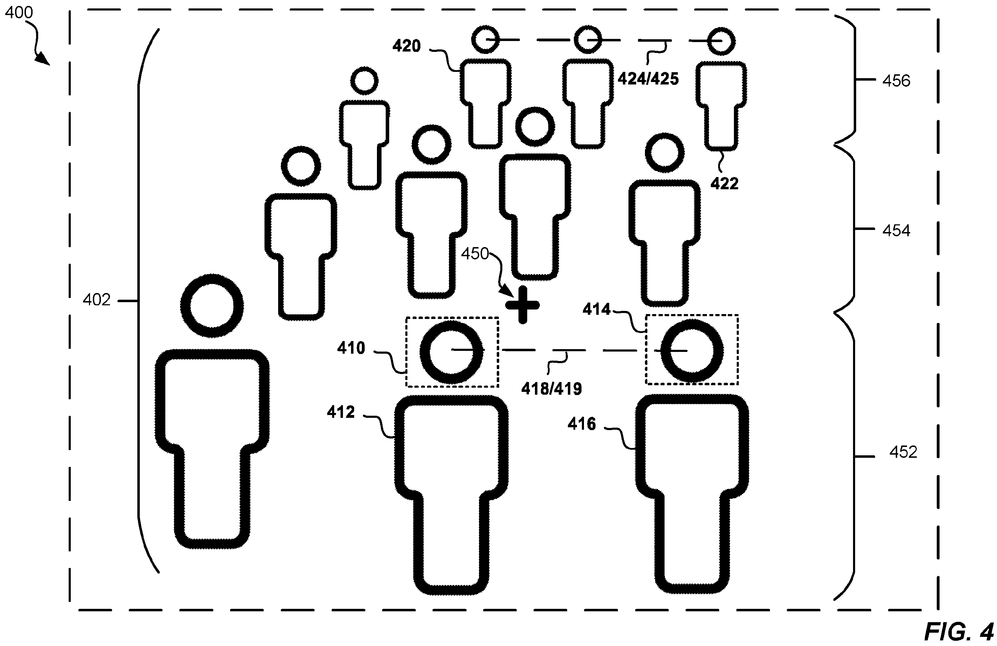

Turning now to FIG. 4, an example of an image 400 may include people 402 appearing at different depths with respect to the device (not shown) capturing the image 400. Those standing farther back may appear smaller than those standing closer to the capturing device. One aspect of the present disclosure includes determining physical distances between two objects (such as two of the people 402) based on the Euclidean distances of the objects as shown in the image 400.

In one implementation, a first bounding box 410 may be drawn around a head of the first person 412 and a second bounding box 414 may be drawn around a head of the second person 416. A first Euclidean distance 418 may be determined based on centroids of the first bounding box 410 and the second bounding box 414 as described above. The first Euclidean distance 418 between the first person 412 and the second person 416 may be identical to the second Euclidean distance 424 between third person 420 and the fourth person 422. However, the first physical distance 419 is not identical to the second physical distance 425. The appearance of the Euclidean distances 418, 424 being similar may be due to the perspective of the image 400.

An aspect of the present disclosure may address this issue and scale the distance estimation accordingly. For example, aspects may include identifying an image midpoint point 450. Based on the image midpoint point 450, one or more scaling factors may be defined to account for differences in depth and thereby enable more accurate estimation of the Euclidean distances between objects. For example, a scaling factor of 1 may be defined for a first zone 452 (e.g., the "front" of the image 400). A scaling factor of 2 may be defined for a second zone 454 (e.g., the "middle" of the image 400). A scaling factor of 4 may be defined for a third zone 456 (e.g., the "back" of the image 400). Other ways of defining scaling factors to account for differences in depth, and thereby enable more accurate estimation of the Euclidean distances between objects, may be implemented without deviating from the aspects of the present disclosure.

For example, the first Euclidean distance 418 may be determined to be 2 meters (m). Based on the scaling factor of 1 for the first zone 452, the first physical distance 419 may be determined to be 2 m (i.e., a product of the first Euclidean distance 418 and the scaling factor of the first zone 452). The second Euclidean distance 424 may be identical to the first Euclidean distance 418 of 2 m. However, based on the scaling factor of 4 for the third zone 456, the second physical distance 425 may be determined to be 8 m (i.e., a product of the second Euclidean distance 424 and the scaling factor of the third zone 456).

In some aspects, vertical and/or horizontal physical distances may be determined based on the techniques described above.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof" include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof" may be A only, B only, C only, A and B, A and C, B and C, or A and B and C, where any such combinations may contain one or more member or members of A, B, or C. Moreover, nothing disclosed herein is intended to be dedicated to the public regardless of whether such disclosure is explicitly recited in the claims. The words "module," "mechanism," "element," "device," and the like may not be a substitute for the word "means." As such, no claim element is to be construed as a means plus function unless the element is expressly recited using the phrase "means for."

## Claims

1. A video analysis system (100) for determining physical information from a video frame (400) for monitoring occupancy and social distancing to avoid transmission and spread of viruses, comprising:
- a memory (204);
- a processor (202) in communication with the memory (204) and configured to:
- receive a plurality of frames from a video stream (106);
- identify a first object (412) and a second object (416) within at least one of the plurality of frames;
- increment an object count value based on identifying the first object (412) and the second object (416);
- calculate a physical distance (419, 425) between the first object (412) and the second object (416) using a distance determination model (102),
- wherein the distance determination model (102) uses a combination of (i) reference objects and (ii) a first size of a first bounding box (410) around the first object (412) to determine a first depth component of a first set of coordinates for the first object (412), and a second size of a second bounding box (414) around the second object (416) to determine a second depth component of a second set of coordinates for the second object (416);
- generate a distance alert (112) based on the physical distance (419, 425) and/or
- generate an object count alert (114) based on the object count value.

2. The video analysis system (100) of claim 1,
wherein the processor (202) is further configured to:
- compare the physical distance (419, 425) to a distance threshold condition; and
- generate the distance alert (112) in response to the physical distance (419, 425) meeting the distance threshold condition.

3. The video analysis system (100) of one of claims 1 or 2,
wherein calculating the physical distance (419, 425) further comprises:
- determining an image midpoint (450) within at least one of the plurality of frames;
- determining two or more zones (452, 454, 456);
- determining two or more scaling factors each associated with one of the two or more zones (452, 454, 456);
- determining a Euclidean distance (418, 424) between the first object (412) and the second object (416) based on centroids of the first bounding box (410) and the second bounding box (414); and
- determining the physical distance (419, 425) between the first object (412) and the second object (416) based on the Euclidean distance (418, 424) and a corresponding scaling factor of the two or more scaling factors.

4. The video analysis system of claim 3,
wherein determining the physical distance (419, 425) comprises multiplying the Euclidean distance (418, 424) by the corresponding scaling factor.

5. A method (300) of determining physical information from a video frame (499) for monitoring occupancy and social distancing to avoid transmission and spread of viruses, comprising:
- receiving a plurality of frames from a video stream (106);
- identifying a first object (412) and a second object (416) within at least one of the plurality of frames;
- incrementing an object count value based on identifying the first object (412) and the second object (416);
- calculating a physical distance (419, 425) between the first object (412) and the second object (416) using a distance determination model (102),
- wherein the distance determination model (102) uses a combination of (i) reference objects and (ii) a first size of a first bounding box (410) around the first object (412) to determine a first depth component of a first set of coordinates for the first object, and that uses a second size of a second bounding box (414) around the second object (416) to determine a second depth component of a second set of coordinates for the second object (416); and
- generating a distance alert (112) based on the physical distance (419, 425) and/or
- generating an object count alert (114) based on the object count value.

6. The method (300) of claim 5, further comprising:
- comparing the physical distance (419, 425) to a distance threshold condition; and
wherein generating the distance alert (112) is in response to the physical distance (419, 425) meeting the distance threshold condition.

7. The method (300) of one of claims 5 or 6, further comprising:
- determining an image midpoint (450) within at least one of the plurality of frames;
- determining two or more zones (452, 454, 456);
- determining two or more scaling factors each associated with one of the two or more zones (452, 454, 456);
- determining a Euclidean distance (418, 424) between the first object (412) and the second object (416) based on centroids of the first bounding box (410) and the second bounding box (414); and
- determining the physical distance (419, 425) between the first object (412) and the second object (416) based on the Euclidean distance (418, 424) and a corresponding scaling factor of the two or more scaling factors.

8. The method (300) of claim 7,
wherein determining the physical distance (419, 425) comprises multiplying the Euclidean (418, 424) distance by the corresponding scaling factor.

9. A non-transitory computer-readable medium for monitoring occupancy and social distancing to avoid transmission and spread of viruses, storing instructions executable by a processor (202) to cause the processor (202) to:
- receive a plurality of frames from a video stream (106);
- identify a first object (412) and a second object (416) within at least one of the plurality of frames;
- increment an object count value based on identifying the first object (412) and the second object (416);
- calculate a physical distance (419, 425) between the first object (412) and the second object (416) using a distance determination model (102),
- wherein the distance determination model (102) uses a combination of (i) reference objects and (ii) a first size of a first bounding box (410) around the first object (412) to determine a first depth component of a first set of coordinates for the first object (412), and that uses a second size of a second bounding box (414) around the second object (416) to determine a second depth component of a second set of coordinates for the second object (416);
- generate a distance alert (112) based on the physical distance (419, 425) and/or
- generate an object count alert (114) based on the object count value.

10. The non-transitory computer-readable medium of claim 9,
further comprising instructions that cause the processor (202) to:
- compare the physical distance (419, 425) to a distance threshold condition; and
- generate the distance alert (112) in response to the physical distance (419, 425) meeting the distance threshold condition.

11. The non-transitory computer-readable medium of one of claims 9 or 10, wherein the instructions for calculating the physical distance (419, 425) further comprise instructions for:
- determining an image midpoint (450) within at least one of the plurality of frames;
- determining two or more zones (452, 454, 456);
- determining two or more scaling factors each associated with one of the two or more zones (452, 454, 456);
- determining a Euclidean distance (418, 424) between the first object (412) and the second object (416) based on centroids of the first bounding box (410) and the second bounding box (414); and
- determining the physical distance (419, 425) between the first object (412) and the second object (416) based on the Euclidean distance (418, 424) and a corresponding scaling factor of the two or more scaling factors.

12. The non-transitory computer-readable medium of claim 11,
wherein determining the physical distance (419, 425) comprises multiplying the Euclidean distance (418, 424) by the corresponding scaling factor.

## Patentansprüche

1. Videoanalysesystem (100) zur Ermittlung physikalischer Informationen aus einem Videobild (400) zur Überwachung der Belegung und der Einhaltung von Abstandsregeln, um die Übertragung und Verbreitung von Viren zu vermeiden, umfassend:
- einen Speicher (204);
- einen Prozessor (202) in Kommunikation mit dem Speicher (204), der dazu konfiguriert ist:
- mehrere Bilder aus einem Videostream (106) zu empfangen;
- ein erstes Objekt (412) und ein zweites Objekt (416) in mindestens einem der mehreren Bilder zu identifizieren;
- einen Objektzählerwert basierend auf der Identifizierung des ersten Objekts (412) und des zweiten Objekts (416) zu erhöhen;
- mithilfe eines Abstandsbestimmungsmodells (102) einen physikalischen Abstand (419, 425) zwischen dem ersten Objekt (412) und dem zweiten Objekt (416) zu berechnen,
- wobei das Abstandsbestimmungsmodell (102) eine Kombination aus (i) Referenzobjekten und (ii) einer ersten Größe eines ersten Begrenzungsrahmens (410) um das erste Objekt (412) verwendet, um eine erste Tiefenkomponente eines ersten Koordinatensatzes für das erste Objekt (412) zu bestimmen, und einer zweiten Größe eines zweiten Begrenzungsrahmens (414) um das zweite Objekt (416), um eine zweite Tiefenkomponente eines zweiten Koordinatensatzes für das zweite Objekt (416) zu bestimmen;
- eine Abstandswarnung (112) basierend auf dem physikalischen Abstand (419, 425) zu erzeugen und/oder
- eine Objektzählungswarnung (114) basierend auf dem Objektzählungswert zu erzeugen.

2. Videoanalysesystem (100) nach Anspruch 1,
wobei der Prozessor (202) ferner dazu konfiguriert ist:
- den physikalischen Abstand (419, 425) mit einem Abstandsschwellenwert zu vergleichen; und
- die Abstandswarnung (112) ausgibt, sobald der physikalische Abstand (419, 425) den Abstandsschwellenwert erreicht.

3. Videoanalysesystem (100) nach einem der Ansprüche 1 oder 2,
wobei die Berechnung des physikalischen Abstands (419, 425) Folgendes umfasst:
- Bestimmen eines Bildmittelpunkts (450) innerhalb mindestens eines der mehreren Bilder;
- Bestimmen von zwei oder mehr Zonen (452, 454, 456);
- Bestimmen von zwei oder mehr Skalierungsfaktoren, die jeweils einer der zwei oder mehr Zonen (452, 454, 456) zugeordnet sind;
- Bestimmen eines euklidischen Abstands (418, 424) zwischen dem ersten Objekt (412) und dem zweiten Objekt (416) auf Basis der Schwerpunkte des ersten Begrenzungsrahmens (410) und des zweiten Begrenzungsrahmens (414); und
- Bestimmen des physikalischen Abstands (419, 425) zwischen dem ersten Objekt (412) und dem zweiten Objekt (416) auf Basis des euklidischen Abstands (418, 424) und eines entsprechenden Skalierungsfaktors aus den zwei oder mehr Skalierungsfaktoren.

4. Videoanalysesystem nach Anspruch 3,
wobei die Bestimmung des physikalischen Abstands (419, 425) das Multiplizieren des euklidischen Abstands (418, 424) mit dem entsprechenden Skalierungsfaktor umfasst.

5. Verfahren (300) zur Bestimmung physikalischer Informationen aus einem Videobild (499) zur Überwachung der Auslastung und der Einhaltung von Abstandsregeln, um die Übertragung und Verbreitung von Viren zu verhindern, umfassend:
- Empfangen mehrerer Bilder aus einem Videostream (106);
- Identifizieren eines ersten Objekts (412) und eines zweiten Objekts (416) in mindestens einem der mehreren Bilder;
- Erhöhen eines Objektzählers basierend auf der Identifizierung des ersten Objekts (412) und des zweiten Objekts (416);
- Berechnen des physikalischen Abstands (419, 425) zwischen dem ersten Objekt (412) und dem zweiten Objekt (416) mithilfe eines Abstandsbestimmungsmodells (102),
- wobei das Abstandsbestimmungsmodell (102) eine Kombination aus (i) Referenzobjekten und (ii) einer ersten Größe eines ersten Begrenzungsrahmens (410) um das erste Objekt (412) verwendet, um eine erste Tiefenkomponente eines ersten Koordinatensatzes für das erste Objekt zu bestimmen, und das eine zweite Größe eines zweiten Begrenzungsrahmens (414) um das zweite Objekt (416) verwendet, um eine zweite Tiefenkomponente eines zweiten Koordinatensatzes für das zweite Objekt (416) zu bestimmen; und
- Erzeugen einer Abstandswarnung (112) basierend auf dem physikalischen Abstand (419, 425) und/oder
- Erzeugen einer Objektzählungswarnung (114) basierend auf dem Objektzählungswert.

6. Verfahren (300) nach Anspruch 5, ferner umfassend:
- Vergleichen des physikalischen Abstands (419, 425) mit einem Abstandsschwellenwert; und
wobei das Erzeugen der Abstandswarnung (112) erfolgt, wenn der physikalische Abstand (419, 425) den Abstandsschwellenwert erreicht.

7. Verfahren (300) nach einem der Ansprüche 5 oder 6, ferner umfassend:
- Bestimmen eines Bildmittelpunkts (450) innerhalb mindestens eines der mehreren Bilder;
- Bestimmen von zwei oder mehr Zonen (452, 454, 456);
- Bestimmen von zwei oder mehr Skalierungsfaktoren, die jeweils einer der zwei oder mehr Zonen (452, 454, 456) zugeordnet sind;
- Bestimmen eines euklidischen Abstands (418, 424) zwischen dem ersten Objekt (412) und dem zweiten Objekt (416) basierend auf den Schwerpunkten des ersten Begrenzungsrahmens (410) und des zweiten Begrenzungsrahmens (414); und
- Bestimmen des physikalischen Abstands (419, 425) zwischen dem ersten Objekt (412) und dem zweiten Objekt (416) basierend auf dem euklidischen Abstand (418, 424) und einem entsprechenden Skalierungsfaktor der zwei oder mehr Skalierungsfaktoren.

8. Verfahren (300) nach Anspruch 7,
wobei das Bestimmen des physikalischen Abstands (419, 425) das Multiplizieren des euklidischen Abstands (418, 424) mit dem entsprechenden Skalierungsfaktor umfasst.

9. Nichtflüchtiges, computerlesbares Medium zur Überwachung der Belegung und der Einhaltung von Abstandsregeln, um die Übertragung und Verbreitung von Viren zu verhindern, das Medium speichert Anweisungen, die von einem Prozessor (202) ausgeführt werden können und diesen veranlassen:
- mehrere Bilder aus einem Videostream (106) zu empfangen;
- ein erstes Objekt (412) und ein zweites Objekt (416) in mindestens einem der mehreren Bilder zu identifizieren;
- einen Objektzählerwert basierend auf der Identifizierung des ersten Objekts (412) und des zweiten Objekts (416) zu erhöhen;
- mithilfe eines Abstandsbestimmungsmodells (102) den physikalischen Abstand (419, 425) zwischen dem ersten Objekt (412) und dem zweiten Objekt (416) zu berechnen,
- wobei das Abstandsbestimmungsmodell (102) eine Kombination aus (i) Referenzobjekten und (ii) der ersten Größe eines ersten Begrenzungsrahmens (410) um das erste Objekt (412) verwendet, um eine erste Tiefenkomponente eines ersten Koordinatensatzes für das erste Objekt (412) zu bestimmen, und die zweite Größe eines zweiten Begrenzungsrahmens (414) um das zweite Objekt (416) verwendet, um eine zweite Tiefenkomponente eines zweiten Koordinatensatzes für das zweite Objekt (416) zu bestimmen;
- eine Abstandswarnung (112) basierend auf dem physischen Abstand (419, 425) zu erzeugen und/oder
- eine Objektzählungswarnung (114) basierend auf dem Objektzählungswert zu erzeugen.

10. Nichtflüchtiges, computerlesbares Medium nach Anspruch 9,
ferner umfassend Anweisungen, die den Prozessor (202) veranlassen:
- den physikalischen Abstand (419, 425) mit einem Abstandsschwellenwert zu vergleichen; und
- die Abstandswarnung (112) zu erzeugen, sobald der physikalische Abstand (419, 425) den Abstandsschwellenwert erreicht.

11. Nichtflüchtiges, computerlesbares Medium nach einem der Ansprüche 9 oder 10,
wobei die Anweisungen zur Berechnung des physikalischen Abstands (419, 425) ferner Anweisungen umfassen für:
- die Bestimmung eines Bildmittelpunkts (450) innerhalb mindestens eines der mehreren Bilder;
- die Bestimmung von zwei oder mehr Zonen (452, 454, 456);
- die Bestimmung von zwei oder mehr Skalierungsfaktoren, die jeweils einer der zwei oder mehr Zonen (452, 454, 456) zugeordnet sind;
- die Bestimmung eines euklidischen Abstands (418, 424) zwischen dem ersten Objekt (412) und dem zweiten Objekt (416) auf Grundlage der Schwerpunkte des ersten Begrenzungsrahmens (410) und des zweiten Begrenzungsrahmens (414); und
- die Bestimmung des physikalischen Abstands (419, 425) zwischen dem ersten Objekt (412) und dem zweiten Objekt (416) auf Grundlage des euklidischen Abstands (418, 424) und eines entsprechenden Skalierungsfaktors aus den zwei oder mehr Skalierungsfaktoren.

12. Nichtflüchtiges, computerlesbares Medium nach Anspruch 11,
wobei die Bestimmung des physikalischen Abstands (419, 425) die Multiplikation des euklidischen Abstands (418, 424) mit dem entsprechenden Skalierungsfaktor umfasst.

## Revendications

1. Système d'analyse vidéo (100) permettant de déterminer des informations physiques à partir d'une image vidéo (400) afin de surveiller la fréquentation et le respect de la distanciation sociale pour éviter la transmission et la propagation de virus, comprenant :
- une mémoire (204) ;
- un processeur (202) en communication avec la mémoire (204) et configuré pour :
- recevoir une pluralité de trames à partir d'un flux vidéo (106) ;
- identifier un premier objet (412) et un second objet (416) à l'intérieur d'au moins l'une parmi la pluralité de trames ;
- incrémenter une valeur de comptage d'objets en fonction de l'identification du premier objet (412) et du second objet (416) ;
- calculer une distance physique (419, 425) entre le premier objet (412) et le second objet (416) à l'aide d'un modèle de détermination de distance (102),
- dans lequel le modèle de détermination de distance (102) utilise une combinaison (i) d'objets de référence et (ii) d'une première dimension d'un premier rectangle englobant (410) entourant le premier objet (412) pour déterminer une première composante de profondeur d'un premier ensemble de coordonnées pour le premier objet (412), et d'une seconde dimension d'un second rectangle englobant (414) autour du second objet (416) pour déterminer une seconde composante de profondeur d'un second ensemble de coordonnées pour le second objet (416) ;
- générer une alerte de distance (112) en fonction de la distance physique (419, 425) et/ou
- générer une alerte de comptage d'objets (114) en fonction de la valeur de comptage d'objets.

2. Système d'analyse vidéo (100) selon la revendication 1,
dans lequel le processeur (202) est en outre configuré pour :
- comparer la distance physique (419, 425) à une condition relative au seuil de distance ; et
- générer l'alerte de distance (112) en réponse au fait que la distance physique (419, 425) remplit la condition relative au seuil de distance.

3. Système d'analyse vidéo (100) selon l'une des revendications 1 ou 2,
dans lequel le calcul de la distance physique (419, 425) comprend en outre :
- la détermination d'un point central d'image (450) dans au moins l'une de la pluralité de trames ;
- la détermination de deux ou plusieurs zones (452, 454, 456) ;
- la détermination de deux ou plusieurs facteurs d'échelle, chacun étant associé à l'une parmi les deux ou plusieurs zones (452, 454, 456) ;
- la détermination d'une distance euclidienne (418, 424) entre le premier objet (412) et le second objet (416) en fonction des centroïdes du premier rectangle englobant (410) et du second rectangle englobant (414) ; et
- la détermination de la distance physique (419, 425) entre le premier objet (412) et le second objet (416) en fonction de la distance euclidienne (418, 424) et d'un facteur d'échelle correspondant parmi les deux ou plusieurs facteurs d'échelle.

4. Système d'analyse vidéo selon la revendication 3, dans lequel la détermination de la distance physique (419, 425) comprend la multiplication de la distance euclidienne (418, 424) par le facteur d'échelle correspondant.

5. Procédé (300) permettant de déterminer des informations physiques à partir d'une image vidéo (499) afin de surveiller l'occupation des lieux et le respect de la distanciation sociale pour éviter la transmission et la propagation de virus, comprenant :
- la réception de plusieurs trames à partir d'un flux vidéo (106) ;
- l'identification d'un premier objet (412) et d'un second objet (416) à l'intérieur d'au moins l'une parmi la pluralité de trames ;
- l'incrémentation d'une valeur de comptage d'objets en fonction de l'identification du premier objet (412) et du second objet (416) ;
- le calcul d'une distance physique (419, 425) entre le premier objet (412) et le second objet (416) à l'aide d'un modèle de détermination de distance (102),
- dans lequel le modèle de détermination de distance (102) utilise une combinaison (i) d'objets de référence et (ii) d'une première dimension d'un premier rectangle englobant (410) entourant le premier objet (412) pour déterminer une première composante de profondeur d'un premier ensemble de coordonnées pour le premier objet et qui utilise une seconde dimension d'un second rectangle englobant (414) autour du second objet (416) pour déterminer une seconde composante de profondeur d'un second ensemble de coordonnées pour le second objet (416) ; et
- la génération d'une alerte de distance (112) en fonction de la distance physique (419, 425) et/ou
- la génération d'une alerte de comptage d'objets (114) en fonction de la valeur de comptage d'objets.

6. Procédé (300) selon la revendication 5, comprenant en outre :
- la comparaison de la distance physique (419, 425) à une condition relative de seuil de distance ; et
dans lequel la génération de l'alerte de distance (112) se fait en réponse au fait que la distance physique (419, 425) remplit la condition relative au seuil de distance.

7. Procédé (300) selon la revendication 5 ou 6, comprenant en outre :
- la détermination d'un point central d'image (450) dans au moins l'une de la pluralité de trames ;
- la détermination de deux ou plusieurs zones (452, 454, 456) ;
- la détermination de deux ou plusieurs facteurs d'échelle, chacun étant associé à l'une parmi les deux ou plusieurs zones (452, 454, 456) ;
- la détermination d'une distance euclidienne (418, 424) entre le premier objet (412) et le second objet (416) en fonction des centroïdes du premier rectangle englobant (410) et du second rectangle englobant (414) ; et
- la détermination de la distance physique (419, 425) entre le premier objet (412) et le second objet (416) en fonction de la distance euclidienne (418, 424) et d'un facteur d'échelle correspondant parmi les deux ou plusieurs facteurs d'échelle.

8. Procédé (300) selon la revendication 7,
dans lequel la détermination de la distance physique (419, 425) comprend la multiplication de la distance euclidienne (418, 424) par le facteur d'échelle correspondant.

9. Support non transitoire lisible par ordinateur permettant de surveiller la fréquentation et le respect de la distanciation sociale afin d'éviter la transmission et la propagation de virus, stockant des instructions exécutables par un processeur (202) afin d'amener le processeur (202) à :
- recevoir une pluralité de trames à partir d'un flux vidéo (106) ;
- identifier un premier objet (412) et un second objet (416) à l'intérieur d'au moins l'une de la pluralité de trames ;
- incrémenter une valeur de comptage d'objets en fonction de l'identification du premier objet (412) et du second objet (416) ;
- calculer une distance physique (419, 425) entre le premier objet (412) et le second objet (416) à l'aide d'un modèle de détermination de distance (102),
- dans lequel le modèle de détermination de distance (102) utilise une combinaison (i) d'objets de référence et (ii) d'une première dimension d'un premier rectangle englobant (410) entourant le premier objet (412) pour déterminer une première composante de profondeur d'un premier ensemble de coordonnées pour le premier objet (412), et qui utilise une seconde dimension d'un second rectangle englobant (414) autour du second objet (416) pour déterminer une seconde composante de profondeur d'un second ensemble de coordonnées pour le second objet (416) ;
- générer une alerte de distance (112) en fonction de la distance physique (419, 425) et/ou
- générer une alerte de comptage d'objets (114) en fonction de la valeur de comptage d'objets.

10. Support non transitoire lisible par ordinateur selon la revendication 9, comprenant en outre des instructions qui amènent le processeur (202) à :
- comparer la distance physique (419, 425) à une condition relative au seuil de distance ; et
- générer l'alerte de distance (112) en réponse au fait que la distance physique (419, 425) remplit la condition relative au seuil de distance.

11. Support non transitoire lisible par ordinateur selon l'une des revendications 9 ou 10,
dans lequel les instructions destinées à calculer la distance physique (419, 425) comprennent en outre des instructions destinées à :
- la détermination d'un point central d'image (450) dans au moins l'une de la pluralité de trames ;
- la détermination de deux ou plusieurs zones (452, 454, 456) ;
- la détermination de deux ou plusieurs facteurs d'échelle, chacun étant associé à l'une parmi les deux ou plusieurs zones (452, 454, 456) ;
- la détermination d'une distance euclidienne (418, 424) entre le premier objet (412) et le second objet (416) en fonction des centroïdes du premier rectangle englobant (410) et du second rectangle englobant (414) ; et
- la détermination de la distance physique (419, 425) entre le premier objet (412) et le second objet (416) en fonction de la distance euclidienne (418, 424) et d'un facteur d'échelle correspondant parmi les deux ou plusieurs facteurs d'échelle.

12. Support non transitoire lisible par ordinateur selon la revendication 11,
dans lequel la détermination de la distance physique (419, 425) comprend la multiplication de la distance euclidienne (418, 424) par le facteur d'échelle correspondant.
